(19) Europäisches Patentamt

European Patent Office

Office européen des brevets

(11) **EP 4 671 068 A1**

(12) **EUROPEAN PATENT APPLICATION**

(43) Date of publication:
**31.12.2025 Bulletin 2026/01**

(21) Application number: **25185854.4**

(22) Date of filing: **27.06.2025**

(51) International Patent Classification (IPC):
**B60W 30/095** (2012.01)

(52) Cooperative Patent Classification (CPC):
**B60W 30/095; G08G 1/166;** B60W 2520/10;
B60W 2520/105; B60W 2530/201;
B60W 2554/4042; B60W 2554/801; B60W 2554/802

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **28.06.2024 CN 202410867498**

(71) Applicant: **Shanghai Horizon Intelligent
Automotive
Technology Co., Ltd.
Shanghai Jiading District 201800 (CN)**

(72) Inventor: **TIAN, Yu
Shanghai (CN)**

(74) Representative: **Epping - Hermann - Fischer
Patentanwaltsgesellschaft mbH
Schloßschmidstraße 5
80639 München (DE)**

(54) **TIME TO COLLISION PREDICTION METHOD AND APPARATUS FOR VEHICLE, MEDIUM, AND ELECTRONIC DEVICE**

(57) Disclosed are a time to collision prediction method and apparatus for a vehicle, a medium, and an electronic device, including: obtaining first state information of an ego vehicle and second state information of a target object; determining a collision risk and a first predicted time to collision between the ego vehicle and the target object based on the first state information and the second state information; in response to that the collision risk indicates that a collision will occur between the ego vehicle and the target object, determining a collision state between the ego vehicle and the target object based on the first predicted time to collision; and determining a target time to collision between the ego vehicle and the target object based on the collision state and the first predicted time to collision.

FIG. 2

**Description**

**FIELD OF THE INVENTION**

This disclosure relates to the technical field of intelligent driving and to the technical field of computer vision, and in particular, to a time to collision prediction method and apparatus for a vehicle, a medium, and an electronic device.

**BACKGROUND OF THE INVENTION**

In fields of autonomous driving and assisted driving, active safety systems such as a forward collision warning (FCW for short) system and an autonomous emergency braking (AEB for short) system need to predict, in a real-time manner, a trajectory of an ego vehicle and a trajectory of a target object (such as a pedestrian or a vehicle) around to which collisions may occur, and calculate time to collision (TTC) to evaluate a collision risk based on the calculated TTC. Therefore, if calculation of the TTC is inaccurate, the collision risk cannot be evaluated correctly, which may lead to false braking or may result in collisions due to inability to predict dangers.

In related technologies, the TTC may be calculated according to a kinematic formula based on a real-time relative distance and speed between the ego vehicle and the target object in a longitudinal or lateral direction. However, for an oblique crossing condition, because the ego vehicle drives along a straight line, the trajectory of the target object crosses that of the ego vehicle, a motion direction of the target object is neither parallel nor perpendicular to that of the ego vehicle, and an actual collision point between the ego vehicle and the target object is difficult to be predicted. Therefore, schemes of calculating the TTC by using the related technologies are prone to errors.

**SUMMARY OF THE INVENTION**

To resolve the foregoing technical problems, this disclose provides a time to collision prediction method and apparatus for a vehicle, a medium, and an electronic device, to improve accuracy of time to collision that is determined in an oblique crossing condition.

According to an embodiment in a first aspect of this disclosure, a time to collision prediction method for a vehicle is provided, including: obtaining first state information of an ego vehicle and second state information of a target object; determining a collision risk and a first predicted time to collision between the ego vehicle and the target object based on the first state information and the second state information; in response to that the collision risk indicates that a collision will occur between the ego vehicle and the target object, determining a collision state between the ego vehicle and the target object based on the first predicted time to collision; and determining a target time to collision between the ego vehicle and the target object based on the collision state and the first predicted time to collision.

According to an embodiment in a second aspect of this disclosure, a time to collision prediction apparatus for a vehicle is provided, including: a first obtaining module, configured to obtain first state information of an ego vehicle and second state information of a target object; a first determining module, configured to determine a collision risk and a first predicted time to collision between the ego vehicle and the target object based on the first state information and the second state information; a second determining module, configured to determine, in response to that the collision risk indicates that a collision will occur between the ego vehicle and the target object, a collision state between the ego vehicle and the target object based on the first predicted time to collision; and a third determining module, configured to determine a target time to collision between the ego vehicle and the target object based on the collision state and the first predicted time to collision.

According to an embodiment in a third aspect of this disclosure, a computer readable storage medium is provided. The storage medium stores computer program instructions, and the computer program instructions are executed to implement the time to collision prediction method for a vehicle provided in the embodiment in the first aspect of this disclosure.

According to an embodiment in a fourth aspect of this disclosure, an electronic device is provided. The electronic device includes:

a memory, configured to store a computer program product; and
a processor, configured to execute the computer program stored in the memory, where the computer program product is executed to implement the time to collision prediction method for a vehicle provided in the embodiment in the first aspect of this disclosure.

According to the embodiments of this disclosure, the collision risk and the first predicted time to collision between the ego vehicle and the target object may be determined based on the first state information of the ego vehicle and the second state information of the target object. If the collision risk indicates that a collision will occur between the ego vehicle and the target object, the collision state (a collision scenario) may be further determined, and the target time to collision may be determined based on the collision state (the collision scenario) and the first predicted time to collision. In view of the above, according to this disclosure, the target time to collision that can better reflect an actual collision scenario may be determined based on the first predicted time to collision and the collision scenario that are preliminarily determined, which improves robustness and accuracy of a time to collision prediction scheme, thereby helping improve safety of vehicle driving control.

## BRIEF DESCRIPTION OF THE DRAWINGS

FIG. 1 illustrates an exemplary application scenario of a time to collision prediction method for a vehicle according to this disclosure;
FIG. 2 is a schematic flowchart of a time to collision prediction method for a vehicle according to an exemplary embodiment of this disclosure;
FIG. 3 is a schematic flowchart of step 202 according to an exemplary embodiment of this disclosure;
FIG. 4 is a schematic flowchart of step 224 according to an exemplary embodiment of this disclosure;
FIG. 5 is a schematic flowchart of step 203 according to an exemplary embodiment of this disclosure;
FIG. 6 is a schematic diagram 1 of a collision state according to an exemplary embodiment of this disclosure;
FIG. 7 is a schematic diagram 2 of a collision state according to an exemplary embodiment of this disclosure;
FIG. 8 is a schematic diagram 3 of a collision state according to an exemplary embodiment of this disclosure;
FIG. 9 is a schematic flowchart of step 204 according to an exemplary embodiment of this disclosure;
FIG. 10 is a schematic diagram of a structure of a time to collision prediction apparatus for a vehicle according to an exemplary embodiment of this disclosure;
FIG. 11 is a schematic diagram of a structure of a time to collision prediction apparatus for a vehicle according to another exemplary embodiment of this disclosure; and
FIG. 12 is a diagram of a structure of an electronic device according to an exemplary embodiment of this disclosure.

## DETAILED DESCRIPTION OF THE EMBODIMENTS

To explain this disclosure, exemplary embodiments of this disclosure are described below in detail with reference to accompanying drawings. Obviously, the described embodiments are merely some, rather than all of embodiments of this disclosure. It should be understood that this disclosure is not limited by the exemplary embodiments.
It should be noted that unless otherwise specified, the scope of this disclosure is not limited by relative arrangement, numeric expressions, and numerical values of components and steps described in these embodiments.

### Overview of this disclosure

In a process of implementing this disclosure, the inventor finds through research that in the field of autonomous driving, an active safety system needs to predict, in a real-time manner, a trajectory of an ego vehicle and a trajectory of a target object (such as a pedestrian or a vehicle) around to which collisions may occur, calculate TTC to evaluate a collision risk based on the calculated TTC, and control the vehicle to perform relevant braking operations when a collision risk is recognized.
In related technologies, for an oblique crossing condition, because the trajectory of the target object crosses that of the ego vehicle, and a motion direction of the target object is neither parallel nor perpendicular to that of the ego vehicle, it is difficult to predict an actual collision point between the ego vehicle and the target object. Low accuracy of the calculated TTC may easily lead to inaccurate determining of the collision risk, resulting in dangers.

### Exemplary overview

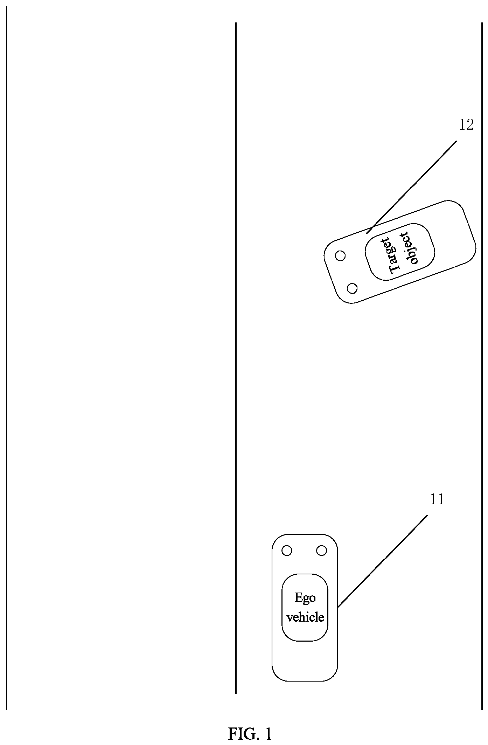

FIG. 1 illustrates an exemplary application scenario of a time to collision prediction method for a vehicle according to this disclosure. As shown in FIG. 1, in scenarios such as autonomous driving and assisted driving, to provide collision warning during a driving process in a timely manner, an ego vehicle 11 may obtain a target object 12 around in a timely manner through task perception, and obtain first state information of the ego vehicle 11 and second state information of the target object 12. Subsequently, a collision risk and a first predicted time to collision between the ego vehicle 11 and the target object 12 are determined. When it is determined that a collision will occur between the ego vehicle 11 and the target object 12, a collision state between the ego vehicle and the target object is determined, and final target time to collision is determined based on the collision state and the first predicted time to collision.

The target object 12 may be a vehicle, a rider, or a pedestrian, and the vehicle may be of any type.

In this disclosure, the first state information of the ego vehicle 11 may include a real-time driving state and physical information of the ego vehicle. The real-time driving state may include information such as a speed and acceleration, and the physical information may include information such as a total length and a total width of the vehicle. The second state information of the target object 12 may include a real-time motion state and physical information of the target object. The real-time motion state may include a speed, acceleration, and the like. The physical information may include a type, a length, and a width of the target object, and a lateral/longitudinal distance of the target object in a vehicle coordinate system of the ego vehicle.

The collision risk between the ego vehicle and the target object may be determined based on the first state information of the ego vehicle 11 and the second state information of the target object 12. Moreover, the target time to collision may be determined when it is determined that a collision will occur, so that the ego vehicle may be controlled to take corresponding collision avoidance measures, such as deceleration and emergency braking. According to this disclosure, the target time to collision that can better reflect an actual scenario may be determined based on the first predicted time to collision and the collision scenario that are preliminarily determined, which improves robustness and accuracy of a time to collision prediction scheme, thereby helping improve safety and effectiveness of vehicle driving control.

Exemplary method

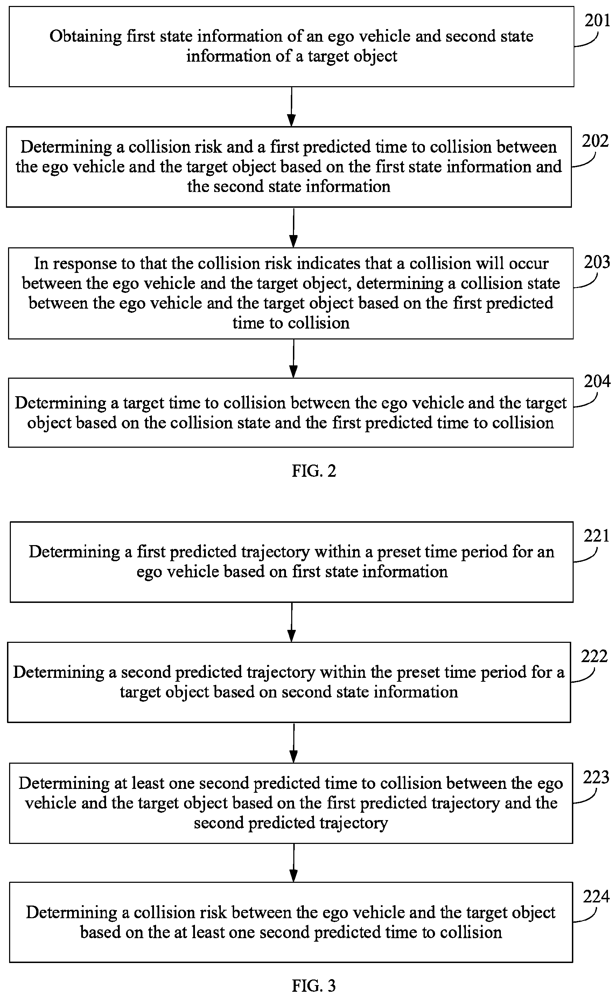

FIG. 2 is a schematic flowchart of a time to collision prediction method for a vehicle according to an exemplary embodiment of this disclosure. This embodiment may be applied to an electronic device. As shown in FIG. 2, the following steps are included.

Step 201: Obtaining first state information of an ego vehicle and second state information of a target object.

The first state information of the ego vehicle is used to characterize a real-time driving state and physical information of the ego vehicle. The real-time driving state may include but is not limited to a speed, acceleration, a yaw angle, a yaw rate, and a vehicle control state (such as a position of an accelerator pedal, a position of a brake pedal, an angle of a steering wheel, angular velocity of the steering wheel, a vehicle gear, and a vehicle mode). The first state information may also include the physical information of the ego vehicle, including but not limited to a total length and a total width of the vehicle, a distance from a rear axle to a bumper, a steering ratio, and cornering stiffness.

In this embodiment, the real-time driving state in the first state information of the ego vehicle may be collected by sensors disposed on the ego vehicle, such as a speed sensor, an acceleration sensor, an angular velocity sensor, an inertial sensor, and an attitude sensor. The physical information in the first state information of the ego vehicle refers to some fixed parameters of the ego vehicle.

The second state information of the target object is used to characterize motion state information and physical information of the target object, which may include but is not limited to a type, a length, and a width of the target object, a lateral/longitudinal distance of the target object in a vehicle coordinate system of the ego vehicle, lateral/longitudinal velocity, lateral/longitudinal acceleration, a yaw angle, a yaw rate, and other information.

In this embodiment, the second state information of the target object may be output by a task perception post-processing module in an assisted driving system of the ego vehicle. After environment images are collected by an image collection device disposed on the ego vehicle, the second state information of the target object may be obtained through processing modules such as image feature extraction and task perception. In other embodiments, the second state information of the target object may also be obtained in combination with data, on which perceptual processing is performed, that is collected by sensors such as a laser radar and a millimeter wave radar. This is not limited in this disclosure.

Step 202: Determining a collision risk and a first predicted time to collision between the ego vehicle and the target object based on the first state information and the second state information.

The collision risk is used to indicate a risk of collisions between the ego vehicle and the target object, and may indicate that a collision will occur or will not occur. The first predicted time to collision is used to indicate a time when a collision may occur between the ego vehicle and the target object, as determined based on the first state information and the second state information.

In this embodiment, the first predicted time to collision may be calculated based on a motion trajectory of a center point of the ego vehicle and a motion trajectory of a center point of the target object. For details, reference may be made to the embodiment shown in FIG. 3, and details are not described herein

Step 203: In response to that the collision risk indicates that a collision will occur between the ego vehicle and the target object, determining a collision state between the ego vehicle and the target object based on the first predicted time to collision.

The collision state is used to characterize a collision scenario when a collision occurs between the ego vehicle and the target object. For example, the collision scenario is any scenario, such as a scenario where a collision occurs between a front corner point of the target object and a side edge of the ego vehicle after the first predicted time to collision, a collision occurs between a rear corner point of the target object and the side edge of the ego vehicle before the first predicted time to collision, or a collision occurs between a side edge of the target object and a front corner point of the ego vehicle before the first predicted time to collision.

In this embodiment, an actual collision scenario where a collision may occur may be determined based on the first predicted time to collision determined in step 202, the first state information of the ego vehicle, and the second state information of the target object.

Step 204: Determining a target time to collision between the ego vehicle and the target object based on the collision state and the first predicted time to collision.

The target time to collision is used to indicate a time, when a collision occurs between the ego vehicle and the target object, that is determined based on the collision state (the collision scenario).

In this embodiment, after being determined, the target time to collision may be sent to a decision processing module of the ego vehicle, which determines collision avoidance measures that the ego vehicle needs to take, such as deceleration and emergency braking.

According to this embodiment of this disclosure, the collision risk and the first predicted time to collision between the ego vehicle and the target object may be determined based on the first state information of the ego vehicle and the second state information of the target object. If the collision risk indicates that a collision will occur between the ego vehicle and the target object, the collision state (the collision scenario) may be further determined, and the target time to collision may be determined based on the collision state (the collision scenario) and the first predicted time to collision. In view of the above, according to this disclosure, the target time to collision that can better reflect an actual collision scenario may be determined based on the first predicted time to collision and the collision scenario that are preliminarily determined, which improves robustness and accuracy of a time to collision prediction scheme, thereby helping improve safety of vehicle driving control.

FIG. 3 is a schematic flowchart of step 202 according to an exemplary embodiment of this disclosure. As shown in FIG. 3, on the basis of the embodiment shown in FIG. 2, step 202 may include the following steps.

Step 221: Determining a first predicted trajectory within a preset time period for the ego vehicle based on the first state information.

The preset time period may be a time period preset for determining whether there is a collision risk. Duration of this time period may be set based on empirical data to ensure that the ego vehicle has enough time to take collision avoidance measures when it is determined that a collision will occur. For example, the preset time period may be 4 seconds. The first predicted trajectory is a travel trajectory, of the ego vehicle within the preset time period, which is predicted based on the first state information of the ego vehicle.

In this embodiment, the preset time period required for prediction may be divided into a preset quantity of sub-time periods, and then, based on the first state information, trajectory segments respectively corresponding to sub-periods are iteratively determined; and the first predicted trajectory is determined based on the trajectory segments respectively corresponding to the sub-time periods.

For example, the preset time period required for prediction may be divided into four segments. For example, if the preset time period is 4 seconds, calculation is performed starting from a $0^{th}$ second, and duration corresponding to the sub-time periods are from the $0^{th}$ second to a $1^{st}$ second, from the $1^{st}$ second to a $2^{nd}$ second, from the $2^{nd}$ second to a $3^{rd}$ second, and from the $3^{rd}$ second to a $4^{th}$ second, respectively. A first trajectory segment of the ego vehicle in a first sub-time period may be first calculated based on the first state information, and then a second trajectory segment in a second sub-time period may be calculated based on a position and speed information of an end point of the first segment trajectory. According to this manner, a third trajectory segment in a third sub-time period and a fourth trajectory segment in a fourth sub-time period are further calculated. Finally, the first predicted trajectory may be represented in a form of a third-order Bezier curve. Four control points of the third-order Bezier curve respectively are $(P_{x0s}, P_{y0s})$, $(P_{x1s}, P_{y1s})$, $(P_{x2s}, P_{y2s})$, and $(P_{x3s}, P_{y3s})$, one of which is an $s^{th}$ trajectory segment (wherein s=0, 1, 2, or 3).

In the trajectory segment, a position of a center point of the ego vehicle in the vehicle coordinate system of the ego vehicle may be represented in the form of formula (1).

$$egopos_x(t) = (1-t)^3 P_{x0s} + 3t(1-t)^2 P_{x1s} + 3t^2(1-t)P_{x2s} + t^3 P_{x3s}$$
$$egopos_y(t) = (1-t)^3 P_{x0s} + 3t(1-t)^2 P_{y1s} + 3t^2(1-t)P_{y2s} + t^3 P_{y3s} \quad \text{formula (1)}$$

In formula (1), $egopos_x(t)$ represents an x-coordinate of a position of the ego vehicle at a time t; $egopos_y(t)$ represents a y-coordinate of the position of the ego vehicle at the time t; and $(P_{x0s}, P_{y0s})$, $(P_{x1s}, P_{y1s})$, $(P_{x2s}, P_{y2s})$, and $(P_{x3s}, P_{y3s})$ represent coordinates of the four control points of the Bezier curve, respectively.

In each sub-time period, a speed of the ego vehicle may be represented in the form of formula (2).

$$\begin{cases} egov_x(t) = 3(1-t)^2\big(P_{x1s} - P_{x0s}\big) + 6t(1-t)\big(P_{x2s} - P_{x1s}\big) + 3t^2\big(P_{x3s} - P_{x2s}\big) \\ egov_y(t) = 3(1-t)^2\big(P_{y1s} - P_{y0s}\big) + 6t(1-t)\big(P_{y2s} - P_{y1s}\big) + 3t^2\big(P_{y3s} - P_{y2s}\big) \end{cases}$$

formula(2)

In formula (2), $egov_x(t)$ represents a speed of the ego vehicle in an x-direction at the time t; $egov_y(t)$ represents a speed of the ego vehicle in a y-direction at the time t; and $(P_{x0s}, P_{y0s})$, $(P_{x1s}, P_{y1s})$, $(P_{s2s}, P_{y2s})$, and $(P_{x3s}, P_{y3s})$ represent coordinates of the four control points of the Bezier curve, respectively.

In this embodiment, other forms of curves such as a B-Spline curve may also be used to characterize the travel trajectory of the ego vehicle, or other Bezier curves such as a second-order Bezier curve and a fourth-order Bezier curve may also be used to characterize the travel trajectory of the ego vehicle. This is not limited in this disclosure.

Step 222: Determining a second predicted trajectory within the preset time period for the target object based on the second state information.

The second predicted trajectory is a travel trajectory of the target object within the preset time period that is predicted based on the second state information of the target object.

In an oblique crossing condition, the second predicted trajectory of the target object may be represented in a form of a straight line in the vehicle coordinate system of the ego vehicle. For example, if the trajectory of the target object is $ax + by + c = 0$, and it is assumed that the position of the target object is $(obspos_x, obspos_y)$ and a speed of the target object is $(obsv_x, obsv_y)$, it is satisfied that $a = obsv_y$, $b = -obsv_x$, and $c = obsv_x obspos_y - obsu_y obspos_x$.

In this disclosure, the trajectory of the target object is illustrated in the form of a straight line. However, it may be understood that the second predicted trajectory may also be in other forms besides the straight line, and curves that can characterize the travel trajectory of the target object are all applicable to this embodiment.

Step 223: Determining at least one second predicted time to collision between the ego vehicle and the target object based on the first predicted trajectory and the second predicted trajectory.

The second predicted time to collision is used to characterize a time corresponding to an intersection point of the first predicted trajectory and the second predicted trajectory. Intersection points of the first predicted trajectory and the second predicted trajectory may be calculated, and effective value in the intersection points may be determined as a second predicted time to collision.

In this embodiment, the first predicted trajectory includes the preset quantity of trajectory segments respectively corresponding to the preset quantity of sub-time periods. Therefore, the second predicted time to collision between the ego vehicle and the target object within each sub-time period may be determined in a chronological order, until it is determined that the collision risk between the ego vehicle and the target object at one determined second predicted time to collision indicates that a collision will occur.

For example, the first predicted trajectory is the third-order Bezier curve shown in formula (1), and the second predicted trajectory is $ax + by + c = 0$. An intersection point $t_i$ (wherein i=0, 1, or 2) of each trajectory segment in the first predicted trajectory and the second predicted trajectory may be obtained according to a mathematical formula. Moreover, after the intersection point $t_i$ of one trajectory segment and the second predicted trajectory is determined, validity of $t_i$ is determined. If the intersection points $t_i$ of this trajectory segment and the second predicted trajectory include a valid time, and it is determined according to step 224 that a collision will occur between the ego vehicle and the target object at that valid time, intersection points of other trajectory segments of the ego vehicle and the second predicted trajectory may not be calculated. If the intersection points $t_i$ of this trajectory segment and the second predicted trajectory are each an invalid value, or although the intersection point is a valid value, it is determined according to step 224 that no collision will occur between the ego vehicle and the target object at this valid time, intersection points $t_i$ of others trajectory segments of the ego vehicle and the second predicted trajectory may be iteratively calculated, and it is further determined whether a collision may occur at $t_i$, until a predicted time to collision when a collision may occur is determined.

If $t_i$ calculated based on the first predicted trajectory and the second predicted trajectory is a numerical value with a complex field, this $t_i$ is an invalid value. If $t_i$ is a value less than 0 or greater than 1 (in the foregoing example, because the 4-second preset time period is divided into 4 sub-time periods, duration of each sub-time period is 1 second), this $t_i$ is also an invalid value. $t_i$ is a valid value merely when it is satisfied that $0 \le t_i < 1$ and there is no complex field for $t_i$.

Step 224: Determining the collision risk between the ego vehicle and the target object based on at least one of the second predicted time to collision.

The collision risk is used to indicate a risk of collisions between the ego vehicle and the target object within the preset time period, and may indicate that a collision will occur or may be no collision.

According to this embodiment of this disclosure, whether a collision may occur between the ego vehicle and the target object may be determined based on the first predicted trajectory of the ego vehicle and the second predicted trajectory of the target object. Because the first predicted trajectory and the second predicted trajectory are respectively determined based on the first state information of the ego vehicle and the second state information of the target object, motion of the ego vehicle and the target object may be simulated, thereby ensuring effectiveness of the predicted trajectory. In addition, trajectory segments of the first predicted trajectory are calculated in segments, intersection points of the trajectory segments and the second predicted trajectory are iteratively calculated in a chronological order, and the iterative calculation is stopped after the second predicted time to collision when a collision may occur is determined. This helps reduce computational complexity and time for determining the time to collision, thereby improving real-time performance and effectiveness of determining the predicted time to collision.

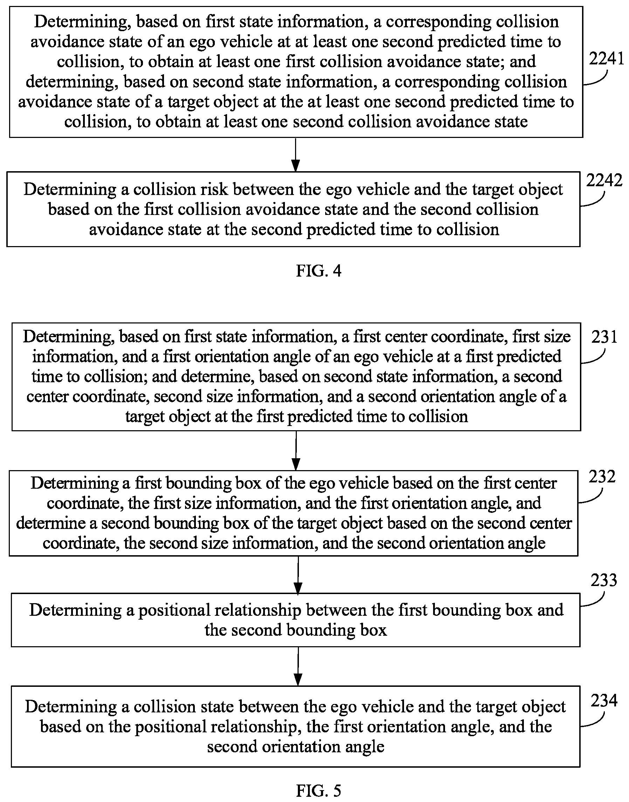

FIG. 4 is a schematic flowchart of step 224 according to an exemplary embodiment of this disclosure. As shown in FIG. 4, on the basis of the embodiments shown in FIG. 2 and FIG. 3, step 224 may include the following steps.

Step 2241: Determining, based on the first state information, a corresponding collision avoidance state of the ego vehicle at the at least one second predicted time to collision, to obtain at least one first collision avoidance state; and determining, based on the second state information, a corresponding collision avoidance state of the target object at the at least one second predicted time to collision, to obtain at least one second collision avoidance state.

The first collision avoidance state is used to indicate whether the ego vehicle can automatically brake and stop before the second predicted time to collision arrives, and the second collision avoidance state is used to indicate whether the target object can stop moving before the second predicted time to collision arrives.

In this embodiment, based on speed information and acceleration information in the first state information of the ego vehicle, whether the ego vehicle can brake and stop, that is, the speed is reduced to 0, before the second predicted time to collision arrives may be determined according to a kinematic formula, so as to determine the first collision avoidance state of the ego vehicle at the second predicted time to collision. For example, three intersection points are determined based on a current trajectory segment in the first predicted trajectory and the second predicted trajectory, and the times respectively corresponding to two of the three intersection points are valid times. Therefore, two second predicted times to collision are determined based on the current trajectory segment and the second predicted trajectory. For the two second predicted times to collision, the speed of the ego vehicle at the second predicted time to collision may be determined according to formula (3).

$$egov_i = egov_0 + egoacc \cdot t_i \quad \text{formula (3)}$$

In formula (3), *egoacc* represents the acceleration information of the ego vehicle, $t_i$ represents the second predicted time to collision, $egov_0$ represents the speed information of the ego vehicle that is included in the first state information, and $egov_i$ represents the speed of the ego vehicle at the second predicted time to collision.

If it is determined according to formula (3) that $egov_i < v_{egothd}$, it is considered that the ego vehicle may brake and stop before the second predicted time to collision arrives. In this case, it may be determined that the first collision avoidance state indicates that the collision can be avoided, or otherwise the collision cannot be avoided. $V_{egothd}$ represents a calibratable parameter, which is typically a value less than 0.

In this embodiment, based on speed information and acceleration information in the second state information of the target object, whether the target object can brake and stop, that is, the speed is reduced to 0, before the second predicted time to collision arrives may be determined according to a kinematic formula. For example, three intersection points are determined based on a current trajectory segment in the first predicted trajectory and the second predicted trajectory, and the times respectively corresponding to two of the three intersection points are valid times. Therefore, two second predicted times to collision are determined based on the current trajectory segment and the second predicted trajectory. For the two second predicted times to collision, the speed of the target object at the second predicted time to collision may be determined according to formula (4).

$$obsv_i = obsv_0 + \text{obsacc} \cdot t_i \quad \text{formula (4)}$$

In formula (4), *obsacc* represents the acceleration of the target object, $t_i$ represents the second predicted time to collision, $obsv_0$ represents the speed of the target object that is included in the second state information, and $obsv_i$ represents the speed of the target object at the second predicted time to collision.

If it is determined according to formula (4) that $obsv_i < v_{obsthd}$, it is considered that the target object may stop moving before the second predicted time to collision arrives. In this case, it may be determined that the second collision avoidance state indicates that the collision can be avoided, or otherwise the collision cannot be avoided. $v_{obsthd}$ represents a calibratable parameter, which is typically a value less than 0.

Step 2242: Determining the collision risk between the ego vehicle and the target object based on the first collision avoidance state and the second collision avoidance state at the second predicted time to collision.

After the first collision avoidance state and the second collision avoidance state corresponding to the second predicted time to collision are determined, the collision risk between the ego vehicle and target object at the second predicted time to collision may be determined based on the first collision avoidance state and the second collision avoidance state at the second predicted time to collision. In response to that there is no collision risk between the ego vehicle and the target object at each second predicted time to collision, it is determined that no collision will occur between the ego vehicle and the target object. In response to that there is a collision risk between the ego vehicle and the target object at the at least one second predicted time to collision, it is determined that the collision will occur between the ego vehicle and the target object.

In specific implementation, whether a collision will occur between the ego vehicle and the target object in sub-time periods may be calculated in a chronological order. If it is determined that there is a second predicted time to collision when a collision will occur within one sub-time period, there is no need to calculate whether there is a second predicted time to collision when a collision will occur in subsequent sub-time periods.

In this embodiment, if both the first collision avoidance state and the second collision avoidance state corresponding to a certain second predicted time to collision indicate that braking and stopping cannot be implemented, that is, both the first collision avoidance state and the second collision avoidance state indicate that the collision cannot be avoided, it may be determined that the collision risk corresponding to the second predicted time to collision indicates that a collision will occur. If the first collision avoidance state and/or the second collision avoidance state corresponding to a certain second predicted time to collision indicates that braking and stopping can be implemented, that is, one of the first collision avoidance state and the second collision avoidance state indicates that the collision can be avoided, it may be determined that the collision risk corresponding to the second predicted time to collision indicates that no collision will occur. If collision risks at more than one second predicted time to collision indicate that a collision will occur, it is determined that the collision risk between the ego vehicle and the target object indicates that a collision will occur. If collision risks at all second predicted times to collision indicate that no collision will occur, it is determined that the collision risk between the ego vehicle and the target object indicates that no collision will occur.

In this embodiment, if collision risks at two or more second predicted times to collision indicate that a collision will occur, the second predicted time to collision that is ahead in a time sequence, that is, has a minimum value, may be determined as the first predicted time to collision that is described above.

According to this embodiment of this disclosure, further determining the first collision avoidance state and the second collision avoidance state at the second predicted time to collision based on the state information of the ego vehicle and the target object is disclosed, so that the collision risk between the ego vehicle and the target object is determined. This improves accuracy and effectiveness of the evaluated collision risk, thereby helping improve the effectiveness of the predicted time to collision.

FIG. 5 is a schematic flowchart of step 203 according to an exemplary embodiment of this disclosure. As shown in FIG. 5, on the basis of the embodiment shown in FIG. 2, step 203 includes the following steps.

Step 231: Determining, based on the first state information, a first center coordinate, first size information, and a first orientation angle of the ego vehicle at the first predicted time to collision; and determine, based on the second state information, a second center coordinate, second size information, and a second orientation angle of the target object at the first predicted time to collision.

The first center coordinate is used to indicate, at the first predicted time to collision, a coordinate of the center point of the ego vehicle in a vehicle coordinate system at an initial moment. The first size information is used to indicate a size of the ego vehicle that is determined based on the physical information of the ego vehicle, such as the total length and the total width of the vehicle. The first orientation angle is used to indicate an orientation angle of the ego vehicle at the first predicted time to collision, which may be determined based on a speed of the ego vehicle at the first predicted time to collision. The second center coordinate is used to indicate, at the first predicted time to collision, a coordinate of the center point of the target object in the vehicle coordinate system at the initial moment. The second size information is used to indicate a size of the target object that is determined based on the physical information of the target object, such as the length and the width of the target object. The second orientation angle is used to indicate an orientation angle of the target object at the first predicted time to collision, which may be determined based on a speed of the target object at the first predicted time to collision.

In this embodiment, according to formulas (1) and (2), the speed and the first center coordinate of the ego vehicle at the first predicted time to collision may be determined according to the following formulas (5) and (6), respectively.

$$\begin{cases} egox_i = (1 - t_i)^3 P'_{x0} + 3t_i(1 - t_i)^2 P'_{x1} + 3t_i^2(1 - t_i)P'_{x2} + t_i^3 P'_{x3} \\ egoy_i = (1 - t_i)^3 P'_{y0} + 3t_i(1 - t_i)^2 P'_{y1} + 3t_i^2(1 - t_i)P'_{y2} + t_i^3 P'_{y3} \end{cases} \text{formula (5)}$$

$$\begin{cases} egovx_i = 3(1 - t_i)^2(P'_{x1} - P'_{x0}) + 6t_i(1 - t_i)(P'_{x2} - P'_{x1}) + 3t_i^2(P'_{x3} - P'_{x2}) \\ egovy_i = 3(1 - t_i)^2(P'_{y1} - P'_{y0}) + 6t_i(1 - t_i)(P'_{y2} - P'_{y1}) + 3t_i^2(P'_{y3} - P'_{y2}) \end{cases} \text{formula}$$

$$(6)$$

In formula (5), $egox_i$ represents a coordinate of the ego vehicle in the x-direction at the first predicted time to collision $t_i$; $egoy_i$ represents a coordinate of the ego vehicle in the y-direction at the first predicted time to collision $t_i$; and $(P'_{x0}, P'_{y0})$, $(P'_{x1}, P'_{y1})$, $(P'_{x2}, P'_{y2})$, and $(P'_{x3}, P'_{y3})$ represent coordinates of the four control points of the Bezier curve, respectively.

In formula (6), $egovx_i$ represents a speed of the ego vehicle in the x-direction at the first predicted time to collision $t_i$; $egovy_i$ represents a speed of the ego vehicle in the y-direction at the first predicted time to collision $t_i$; and $(P'_{x0}, P'_{y0})$, $(P'_{x2}, P'_{y2})$, $(P'_{x3}, P'_{y3})$, and $(P'_{x1}, P'_{y1})$ represent coordinates of the four control points of the Bezier curve, respectively.

According to formula (6), an orientation angle of the ego vehicle at the time $t_i$ may be determined, as shown in formula (7).

$$egoyaw = \arctan2(egovy_i, egovx_i) \quad \text{formula (7)}$$

In formula (7), $egovx_i$ represents a speed of the ego vehicle in the x-direction at the first predicted time to collision $t_i$; and $egovy_i$ represents a speed of the ego vehicle in the y-direction at the first predicted time to collision $t_i$.

In this embodiment, it may be assumed that the motion of the target object is uniformly accelerated rectilinear motion or uniformly decelerated rectilinear motion. For the second center coordinate of the center point of the target object at the first predicted time to collision $t_i$, refer to formula (8).

$$\begin{cases} obsx_i = obsx_0 + vx_0 t_i + \frac{1}{2} ax_0 t_i^2 \\ obsy_i = obsy_0 + vy_0 t_i + \frac{1}{2} ay_0 t_i^2 \end{cases} \quad \text{formula (8)}$$

In formula (8), $(obsx_0, obsy_0)$ represents a horizontal coordinate and a vertical coordinate of the target object in the vehicle coordinate system of the ego vehicle at the initial moment, $(vx_0, vy_0)$ represents a speed of the target object at the initial moment, and $(ax_0, ay_0)$ represents acceleration of the target object at the initial moment. The initial moment herein is used to indicate a moment when prediction of the time to collision of the vehicle starts, that is, a moment when the second state information is obtained.

The orientation angle $obsyaw$ of the target object may also be determined based on the speed of the target object at the first predicted time to collision, as shown in formula (9).

$$obsyaw = \arctan2(obsvy_i, obsvx_i) \quad \text{formula (9)}$$

In formula (9), $obsvx_i$ represents a speed of the target object in the x-direction at the first predicted time to collision $t_i$, and $obsvy_i$ represents a speed of the target object in the y-direction at the first predicted time to collision $t_i$. Since it is assumed that the target object performs uniformly accelerated motion or uniformly decelerated motion, the speeds $obsvy_i$ and $obsvx_i$ at the first predicted time to collision $t_i$ may be determined based on the speed $(vx_0, vy_0)$ and the acceleration $(ax_0, ay_0)$ of the target object at the initial moment.

Step 232: Determining a first bounding box of the ego vehicle based on the first center coordinate, the first size information, and the first orientation angle, and determine a second bounding box of the target object based on the second center coordinate, the second size information, and the second orientation angle.

The first bounding box is used to describe a spatial position of the ego vehicle in the vehicle coordinate system at the initial moment, and is a rectangular border. A size of the first bounding box is determined based on the size of the ego vehicle, and a position thereof is determined based on the first center coordinate and the first orientation angle of the ego vehicle. The second bounding box is used to describe a spatial position of the target object in the vehicle coordinate system at the initial moment, and is a rectangular border. A size of the second bounding box is determined based on the size of the target object, and a position thereof is determined based on the second center coordinate and the second orientation angle of the target object.

For example, a length direction vector of the first bounding box or the second bounding box is shown in formula (10), and a width direction vector of the first bounding box or the second bounding box is shown in formula (11).

$$\begin{cases} vx = \frac{1}{2}l \cos(yaw) \\ vy = \frac{1}{2}l \sin(yaw) \end{cases} \text{formula (10)}$$

$$\begin{cases} wx = \frac{1}{2}w \cos\left(yaw + \frac{\pi}{2}\right) \\ wy = \frac{1}{2}w \sin(yaw + \frac{\pi}{2}) \end{cases} \text{formula (11)}$$

In formulas (10) and (11), *yaw* represents the orientation angle of the ego vehicle or the target object, *l* represents the length of the ego vehicle or the target object, and w represents the width of the ego vehicle or the target object.

In combination with formulas (10) and (11), coordinates of four corner points of the bounding box may be further determined according to formulas (12)-(15).

Coordinate of a left front corner point:
$$\begin{cases} leftfrontx = centerx + vx - wx \\ leftfronty = centery + vy - wy \end{cases} \text{formula (12)}$$

Coordinate of a right front corner point:
$$\begin{cases} rightfrontx = centerx + vx + wx \\ rightfronty = centery + vy + wy \end{cases} \text{formula (13)}$$

Coordinate of a left rear corner point:
$$\begin{cases} leftrearx = centerx - vx - wx \\ leftreary = centery - vy - wy \end{cases} \text{formula (14)}$$

Coordinate of a right rear corner point:
$$\begin{cases} rightrearx = centerx - vx + wx \\ rightreary = centery - vy + wy \end{cases} \text{formula (15)}$$

In formulas (12)-(15), *centerx* and *centery* represent a coordinate of a center point of the bounding box (the first bounding box or the second bounding box), *vx* and *vy* represent the length direction vectors calculated according to formula (10), and *wx and wy* represents the width direction vectors calculated according to formula (11).

Step 233: Determining a positional relationship between the first bounding box and the second bounding box.

The positional relationship between the first bounding box and the second bounding box is used to indicate a positional relationship between the first bounding box and the second bounding box at the first predicted time to collision.

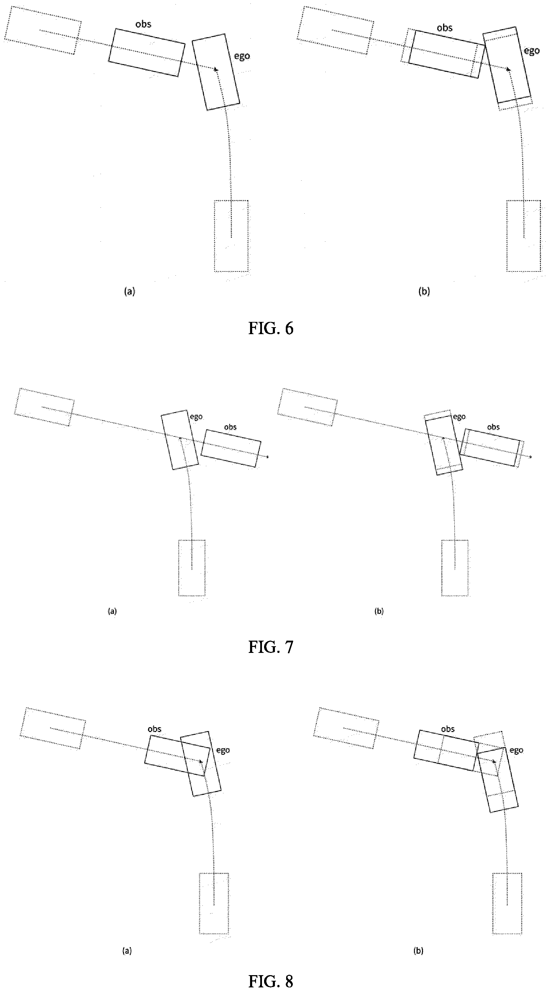

In this embodiment, there may be three types of positional relationships between the first bounding box and the second bounding box. A first type of positional relationship indicates that the second bounding box does not reach a position of the first bounding box, as shown in (a) in FIG. 6. In this case, if a collision occurs between the target object and the ego vehicle, the target time to collision is a time later than the first predicted time to collision, as shown in (b) in FIG. 6.

A second type of positional relationship indicates that the second bounding box has already passed the position of the first bounding box, as shown in (a) in FIG. 7. In this case, if a collision occurs between the target object and the ego vehicle, the target time to collision is a time earlier than the first predicted time to collision, as shown in (b) in FIG. 7.

A third type of positional relationship indicates that the second bounding box overlaps exactly with the first bounding box, as shown in (a) in FIG. 8. In this case, if a collision occurs between the target object and the ego vehicle, the target time to collision is a time earlier than the first predicted time to collision, as shown in (b) in FIG. 8.

Step 234: Determining the collision state between the ego vehicle and the target object based on the positional relationship, the first orientation angle, and the second orientation angle.

The collision state is used to characterize a collision scenario when a collision occurs between the ego vehicle and the target object. For example, the collision scenario is any scenario where a collision occurs between a front corner point of the target object and the side edge of the ego vehicle after the first predicted time to collision, a collision occurs between a rear corner point of the target object and the side edge of the ego vehicle before the first predicted time to collision, or a collision occurs between the side edge of the target object and a front corner point of the ego vehicle before the first predicted time to collision.

Based on the positional relationship between the first bounding box and the second bounding box at the first predicted time to collision that is determined in step 233, a first orientation angle of the ego vehicle and a second orientation angle of the target object after initialization may be determined to obtain motion orientation angles of the target object and the ego vehicle during a period from the first predicted time to collision to the target time to collision, so as to determine the collision scenario between the target object and the ego vehicle. If it is the first case, it is needed to predict a future moment forward based on the first predicted time to collision to obtain the target time to collision. Therefore, there is no need to change states of the ego vehicle and a target object and both the first orientation angle and the second orientation angle are not changed. If it is the second case or the third case, it is needed to deduce backward the time to collision at a historical moment based on the first predicted time to collision. Therefore, it is needed to negate the orientation angles and speed information of the ego vehicle and the target object, swap data between the left front corner point and the right rear corner point, and swap data between the right front corner point and the left rear corner point. Therefore, the first orientation angle and second orientation angle after the initialization are opposite to the original first orientation angle and the original second orientation angle. Therefore, in the first case, the ego vehicle and the target object may move for a short period of time (a collision may occur after moving for a short period of time, such as 0.2 seconds) based on the first orientation angle and the second orientation angle that are calculated according to formulas (7) and (9), to obtain the target time to collision. However, in the second and third cases, the ego vehicle and the target object may move for a short period of time in opposite directions of the first orientation angle and the second orientation angle that are calculated according to formulas (7) and (9), to obtain the target time to collision.

In this embodiment, the collision state may be determined based on the motion orientation angles of the ego vehicle and the target object after the determined first predicted time to collision. There may be four collision states. When it is assumed that the vehicle moves forward (moves in the y-axis of the vehicle coordinate system), four collision states may be classified based on the motion orientation angle of the target object. It may also be understood that the four collision states are determined based on an included angle between the motion orientation angles of the ego vehicle and the target object. The four collision states are as follows: a collision state 1, $0<yaw<\pi/2$; a collision state 2, $\pi/2<yaw<\pi$; a collision state 3, $-\pi/2<yaw<0$; and a collision state 4, $\pi<yaw<-\pi/2$.

According to this embodiment of this disclosure, the first center coordinate, the first size information, and the first orientation angle of the ego vehicle at the first predicted time to collision may be determined based on the first state information; the second center coordinate, the second size information, and the second orientation angle of the target object at the first predicted time to collision may be determined based on the second state information; the first bounding box of the ego vehicle may be determined based on the first center coordinate, the first size information, and the first orientation angle; the second bounding box of the target object may be determined based on the second center coordinate, the second size information, and the second orientation angle; the positional relationship between the first bounding box and the second bounding box may be determined; and the collision state between the ego vehicle and the target object may be determined based on the positional relationship, the first orientation angle, and the second orientation angle. Therefore, in this disclosure, the bounding boxes of the ego vehicle and the target object may be respectively determined based on the first state information and the second state information, and the collision state may be determined based on the positional relationship between the bounding boxes, providing support for determining the target time to collision in the future.

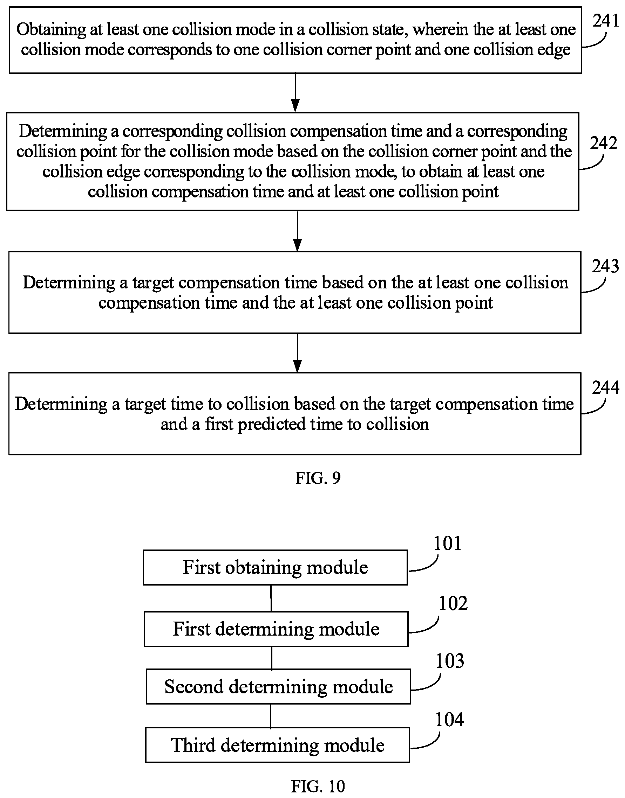

FIG. 9 is a schematic flowchart of step 204 according to an exemplary embodiment of this disclosure. As shown in FIG. 9, on the basis of the embodiment shown in FIG. 2, step 204 includes the following steps.

Step 241: Obtaining at least one collision mode in the collision state, wherein the at least one collision mode corresponds to one collision corner point and one collision edge.

The collision mode is used to indicate a collision position between the target object and the ego vehicle. There are four collision modes in each collision state. The collision corner point refers to a corner point (a corner point of the bounding box) where a collision occurs between the ego vehicle and the target object. The collision edge refers to an edge (a certain edge of the bounding box) where a collision occurs between the ego vehicle and the target object.

For example, in the collision state 1, it is satisfied that $0 < yaw < \dfrac{\pi}{2}$. In this case, possible collision modes between the ego vehicle and the target object are shown in Table 1.

Table 1

| Schematic diagram | Collision mode | Selected collision point |
|---|---|---|
| | A left front corner point of the target object collides with a right side edge of the ego vehicle | Collision corner point: the left front corner point of the target object<br>Collision edge: an edge connecting a right front corner point and a right rear corner point of the ego vehicle |

(continued)

| Schematic diagram | Collision mode | Selected collision point |
|---|---|---|
| | A left side edge of the target object collides with the right front corner point of the ego vehicle | Collision corner point: the right front corner point of the ego vehicle<br>Collision edge: an edge connecting the left front corner point and a left rear corner point of the target object |
| | A left rear corner point of the target object collides with a front side edge of the ego vehicle | Collision corner point: the left rear corner point of the target object<br>Collision edge: an edge connecting a left front corner point and the right front corner point of the ego vehicle |
| | A rear side edge of the target object collides with the left front corner point of the ego vehicle | Collision corner point: the left front corner point of the ego vehicle<br>Collision edge: an edge connecting the left rear corner point and a right rear corner point of the target object |

In the collision state 2, it is satisfied that $\frac{\pi}{2} < yaw < \pi$. In this cases, possible collision modes between the ego vehicle and the target object are shown in Table 2.

Table 2

| Schematic diagram | Collision mode | Selected collision point |
|---|---|---|
| | A right front corner point of the target object collides with a right side edge of the ego vehicle | Collision corner point: the right front corner point of the target object<br>Collision edge: an edge connecting a right front corner point and a right rear corner point of the ego vehicle |
| | A front side edge of the target object collides with the right front corner point of the ego vehicle | Collision corner point: the right front corner point of the ego vehicle<br>Collision edge: an edge connecting the right front corner point and a left front corner point of the target object |

(continued)

| Schematic diagram | Collision mode | Selected collision point |
|---|---|---|
| | The left front corner point of the target object collides with a front side edge of the ego vehicle | Collision corner point: the left front corner point of the target object<br>Collision edge: an edge connecting a left front corner point and the right front corner point of the ego vehicle |
| | A left side edge of the target object collides with the left front corner point of the ego vehicle | Collision corner point: the left front corner point of the ego vehicle<br>Collision edge: an edge connecting the left front corner point and a left rear corner point of the target object |

In the collision state 3, it is satisfied that $-\frac{\pi}{2} < yaw < 0$. In this cases, possible collision modes between the ego vehicle and the target object are shown in Table 3.

Table 3

| Schematic diagram | Collision mode | Selected collision point |
|---|---|---|
| | A front side edge of the target object collides with a left front corner point of the ego vehicle | Collision corner point: the left front corner point of the ego vehicle<br>Collision edge: an edge connecting a right front corner point and a left front corner point of the target object |
| | A left front corner point of the target object collides with a left side edge of the ego vehicle | Collision corner point: the left front corner point of the target object<br>Collision edge: an edge connecting the left front corner point and a left rear corner point of the ego vehicle |

(continued)

| Schematic diagram | Collision mode | Selected collision point |
|---|---|---|
| | The right front corner point of the target object collides with a front side edge of the ego vehicle | Collision corner point: the right front corner point of the target object<br>Collision edge: an edge connecting the left front corner point and a right front corner point of the ego vehicle |
| | A right side edge of the target object collides with the right front corner point of the ego vehicle | Collision corner point: the right front corner point of the ego vehicle<br>Collision edge: the edge connecting the right front corner point and the right rear corner point of the target object |

In the collision state 4, it is satisfied that $\pi < yaw < -\dfrac{\pi}{2}$ . In this cases, possible collision modes between the ego vehicle and the target object are shown in Table 4.

Table 4

| Schematic diagram | Collision mode | Selected collision point |
|---|---|---|
| | A right front corner point of the target object collides with a left side edge of the ego vehicle | Collision corner point: the right front corner point of the target object<br>Collision edge: an edge connecting a left front corner point and a left rear corner point of the ego vehicle |
| | A right side edge of the target object collides with the left front corner point of the ego vehicle | Collision corner point: the left front corner point of the ego vehicle<br>Collision edge: an edge connecting the right front corner point and a right rear corner point of the target object |

(continued)

| Schematic diagram | Collision mode | Selected collision point |
|---|---|---|
| obs / ego | The right rear corner point of the target object collides with a front side edge of the ego vehicle | Collision corner point: the right rear corner point of the target object<br>Collision edge: an edge connecting the left front corner point and a right front corner point of the ego vehicle |
| obs / ego | A rear side edge of the target object collides with the right front corner point of the ego vehicle | Collision corner point: the right front corner point of the ego vehicle<br>Collision edge: an edge connecting a left rear corner point and the right rear corner point of the target object |

Tables 1-4 illustrate the corresponding collision modes for each of the four collision states, respectively.

Four corresponding collision modes may be determined after the collision state is determined according to the embodiment shown in FIG. 5. For example, if the collision state determined in FIG. 5 is the collision state 1, it may be determined that the four possible collision modes are the four modes in Table 1.

Step 242: Determining a corresponding collision compensation time and a corresponding collision point for the collision mode based on the collision corner point and the collision edge corresponding to the collision mode, to obtain at least one collision compensation time and at least one collision point.

The collision point is used to indicate an intersection point of the collision corner point and the collision edge when a collision occurs, and the collision compensation time is used to indicate a time difference between the first predicted time to collision and the target time to collision when the collision actually occurs. If the collision occurs after the first predicted time to collision, the target time to collision may be obtained by adding the first predicted time to collision to the collision compensation time. If the collision occurs before the first predicted time to collision, the target time to collision may be obtained by subtracting the collision compensation time from the first predicted time to collision.

In this embodiment, if the selected collision edge is an edge connecting corner points $(x_{ln1}, y_{ln1})$ and $(x_{ln2}, y_{ln2})$, a motion speed of this edge is $(v_{lnx}, v_{lny})$. If the selected collision corner point is $(x_p, y_p)$ and a speed of the corner point is $(v_{px}, v_{py})$, $\Delta ttc$ from the time $t_i$ to occurrence of the collision may be calculated, as shown in formula (16).

$$\Delta ttc = -\frac{(y_p - y_{ln1}) - k(x_p - x_{ln1})}{(v_{py} - v_{lny}) - k(v_{px} - v_{lnx})} \text{ formula (16)}$$

$$k = \frac{y_{ln2} - y_{ln1}}{x_{ln2} - x_{ln1}} \text{ formula (17)}$$

For the four collision modes of the determined collision state, four sets of $\Delta ttc$ and various collision points may be obtained by inputting data of the selected collision corner point and collision edge into formulas (16) and (17), respectively.

After the collision compensation time corresponding to the collision mode is determined, validity verification may be performed on at least one collision point to obtain at least one valid collision point, and a target compensation time may be determined based on a collision compensation time of the at least one valid collision point. Specifically, it may be determined whether each collision point is on the collision edge (between two corner points of the collision edge), rather than on an extension line of the collision edge.

In specific implementation, at moments $\Delta ttc$, $(x'_p, y'_p) = (x_p + v_{px} * \Delta ttc, y_p + V_{py} * \Delta ttc)$, $(x'_{ln1}, y'_{ln1}) = (x_{ln1} + v_{lnx} *$

$\Delta ttc$, $y_{In1} + v_{Iny} * \Delta ttc$), and $(x'_{In2}, y'_{In2}) = (x_{In2} + v_{Inx} * \Delta ttc, y_{In2} + v_{Iny} * \Delta ttc)$ may be calculated separately. Moreover, $\Delta ttc$ is valid when it is satisfied that $\Delta ttc > 0$, $x'_{In1} < x'_p < x'_{In2}$, and $y'_{In1} < y'_p < y'_{In2}$, or otherwise is invalid.

Step 243: Determining a target compensation time based on the at least one collision compensation time and the at least one collision point.

The target compensation time is used to indicate a minimum time difference between the first predicted time to collision and the target time to collision when the collision actually occurs. When determining the collision compensation time, a plurality of valid collision compensation times may be determined, and a minimum collision compensation time may be determined as the target compensation time.

Step 244: Determining the target time to collision based on the target compensation time and the first predicted time to collision.

In this embodiment, for the case shown in FIG. 6 where the target time to collision is later than the first predicted time to collision, the target time to collision may be calculated according to TTC = $seg + t_i + \Delta ttc$. $seg$ is used to indicate duration corresponding to a quantity of trajectory segments of the first predicted time to collision in the first predicted trajectory. For example, $seg$ is 2 if the first predicted time to collision is located in a second trajectory segment and each trajectory segment corresponds to 1 second. $seg$ is 2 * 2=4 if the first predicted time to collision is located in the second trajectory segment and each segment corresponds to 2 seconds.

In this embodiment, for the case shown in FIG. 7 and FIG. 8 where the target time to collision is earlier than the first predicted time to collision, the target time to collision may be calculated according to TTC = $seg + t_i - \Delta ttc$. $seg$ is used to indicate duration corresponding to a quantity of trajectory segments of the first predicted time to collision in the first predicted trajectory. For example, $seg$ is 2 if the first predicted time to collision is located in a second trajectory segment and each trajectory segment corresponds to 1 second. $seg$ is 2 * 2=4 if the first predicted time to collision is located in the second trajectory segment and each segment corresponds to 2 seconds.

According to this embodiment of this disclosure, by means of obtaining at least one collision mode in the collision state, the corresponding collision compensation time and the corresponding collision point are determined for the collision mode based on the collision corner point and the collision edge corresponding to the collision mode, to obtain the at least one collision compensation time and the at least one collision point; the target compensation time is determined based on the at least one collision compensation time and the at least one collision point; and the target time to collision is determined based on the target compensation time and the first predicted time to collision. In view of the above, according to this disclosure, by deducing forward or backward for the target compensation time, the target time to collision that more accurately reflects a collision in an actual scenario may be obtained with high accuracy and high efficiency but without complex calculations. This helps the vehicle take correct collision avoidance measures in a timely manner, thereby improving safety of autonomous driving.

Exemplary apparatus

FIG. 10 is a schematic diagram of a structure of a time to collision prediction apparatus for a vehicle according to an exemplary embodiment of this disclosure. As shown in FIG. 10, the apparatus includes:

a first obtaining module 101, configured to obtain first state information of an ego vehicle and second state information of a target object;
a first determining module 102, configured to determine a collision risk and a first predicted time to collision between the ego vehicle and the target object based on the first state information and the second state information;
a second determining module 103, configured to determine, in response to that the collision risk indicates that a collision will occur between the ego vehicle and the target object, a collision state between the ego vehicle and the target object based on the first predicted time to collision; and
a third determining module 104, configured to determine a target time to collision between the ego vehicle and the target object based on the collision state and the first predicted time to collision.

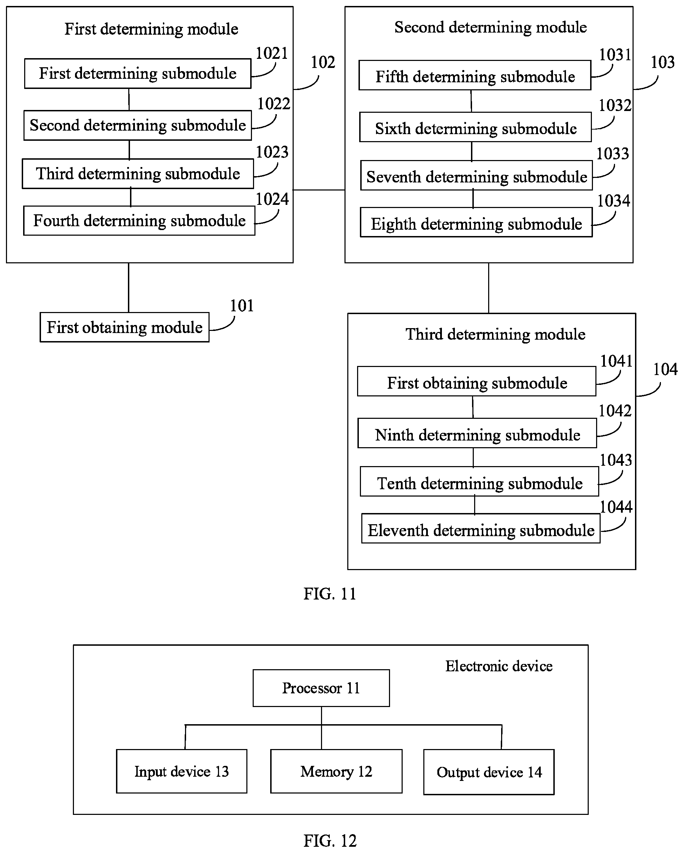

FIG. 11 is a schematic diagram of a structure of a time to collision prediction apparatus for a vehicle according to another exemplary embodiment of this disclosure. As shown in FIG. 11, on the basis of the embodiment shown in FIG. 10, in some embodiments, the first determining module 102 includes:

a first determining submodule 1021, configured to determine a first predicted trajectory within a preset time period for the ego vehicle based on the first state information;
a second determining submodule 1022, configured to determine a second predicted trajectory within the preset time period for the target object based on the second state information;
a third determining submodule 1023, configured to determine at least one second predicted time to collision between the ego vehicle and the target object based on the first predicted trajectory and the second predicted trajectory; and

a fourth determining submodule 1024, configured to determine the collision risk between the ego vehicle and the target object based on the at least one second predicted time to collision.

In some implementations, the fourth determining submodule 1024 is specifically configured to: determine, based on the first state information, a corresponding collision avoidance state of the ego vehicle at the at least one second predicted time to collision, to obtain at least one first collision avoidance state; determine, based on the second state information, a corresponding collision avoidance state of the target object at the at least one second predicted time to collision, to obtain at least one second collision avoidance state; and determine the collision risk between the ego vehicle and the target object based on the first collision avoidance state and the second collision avoidance state at the second predicted time to collision.

In some implementations, the fourth determining submodule 1024 is specifically configured to: determine a collision risk between the ego vehicle and the target object at the second predicted time to collision based on the first collision avoidance state and the second collision avoidance state at the second predicted time to collision; in response to that there is no collision risk between the ego vehicle and the target object at each second predicted time to collision, determine that no collision will occur between the ego vehicle and the target object; and in response to that there is a collision risk between the ego vehicle and the target object at the at least one second predicted time to collision, determine that the collision will occur between the ego vehicle and the target object.

In some implementations, the second determining module 103 includes:

a fifth determining submodule 1031, configured to determine, based on the first state information, a first center coordinate, first size information, and a first orientation angle of the ego vehicle at the first predicted time to collision; and determine, based on the second state information, a second center coordinate, second size information, and a second orientation angle of the target object at the first predicted time to collision;

a sixth determining submodule 1032, configured to determine a first bounding box of the ego vehicle based on the first center coordinate, the first size information, and the first orientation angle; and determine a second bounding box of the target object based on the second center coordinate, the second size information, and the second orientation angle;

a seventh determining submodule 1033, configured to determine a positional relationship between the first bounding box and the second bounding box; and

an eighth determining submodule 1034, configured to determine the collision state between the ego vehicle and the target object based on the positional relationship, the first orientation angle, and the second orientation angle.

In some implementations, the third determining module 104 includes:

a first obtaining submodule 1041, configured to obtain at least one collision mode in the collision state, wherein the at least one collision mode corresponds to one collision corner point and one collision edge;

a ninth determining submodule 1042, configured to determine a corresponding collision compensation time and a corresponding collision point for the collision mode based on the collision corner point and the collision edge corresponding to the collision mode, to obtain at least one collision compensation time and at least one collision point;

a tenth determining submodule 1043, configured to determine a target compensation time based on the at least one collision compensation time and the at least one collision point; and

an eleventh determining submodule 1044, configured to determine the target time to collision based on the target compensation time and the first predicted time to collision.

In some implementations, the tenth determining submodule 1043 is specifically configured to perform validity verification on the at least one collision point to obtain at least one valid collision point; and determine the target compensation time based on collision compensation time of the at least one valid collision point.

In some implementations, the first determining submodule 1021 is specifically configured to divide the preset time period into a preset quantity of sub-time periods; iteratively determine a corresponding trajectory segment for the sub-time periods based on the first state information; and determine the first predicted trajectory based on the corresponding trajectory segment of each sub-time period.

In some implementations, the third determining submodule 1023 is specifically configured to determine the second predicted time to collision between the ego vehicle and the target object within each sub-time period in a chronological order, until it is determined that the collision risk between the ego vehicle and the target object at one determined second predicted time to collision indicates that there is a collision.

Exemplary embodiments of this apparatus correspond to the section of exemplary method described above, and for relevant content, reference may be made to each other. For beneficial technical effects corresponding to the exemplary embodiments of this apparatus, reference may be made to the corresponding beneficial technical effects in the section of exemplary method described above, and details are not described herein again.

Exemplary electronic device

FIG. 12 is a diagram of a structure of an electronic device according to an exemplary embodiment of this disclosure. The electronic device includes at least one processor 11 and a memory 12.

The processor 11 may be a central processing unit (CPU) or another form of processing unit having a data processing capability and/or an instruction execution capability, and may control other components in the electronic device to implement desired functions.

The memory 12 may include one or more computer program products, which may include various forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer readable storage medium. The processor 11 may execute the one or more program instructions to implement the time to collision prediction method for a vehicle according to the various embodiments of this disclosure that are described above and/or other desired functions.

In an example, the electronic device may further include an input device 13 and an output device 14. These components are connected with each other through a bus system and/or another form of connection mechanism (not shown).

The input device 13 may further include, for example, a keyboard, a mouse, a touch screen, and a sound pickup device (such as a microphone array).

The output device 14 may output various information to the outside, and may include, for example, a display, a speaker, a printer, a communication network, and a remote output device connected to the communication network.

Certainly, for simplicity, FIG. 12 shows only some of components in the electronic device that are related to this disclosure, and components such as a bus and an input/output interface are omitted. In addition, according to specific application situations, the electronic device may further include any other appropriate components.

Exemplary computer program product and computer readable storage medium

In addition to the foregoing method and device, embodiments of this disclosure may also provide a computer program product, which includes computer program instructions. When the computer program instructions are executed by a processor, the processor is enabled to perform the steps, of the time to collision prediction method for a vehicle according to the embodiments of this disclosure, that are described in the "Exemplary method" section described above.

The computer program product may be program code, written with one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer readable storage medium, which stores computer program instructions. When the computer program instructions are run by the processor, the processor is enabled to perform the steps, of the time to collision prediction method for a vehicle according to the embodiments of this disclosure, that are described in the "Exemplary method" section described above.

The computer readable storage medium may be one readable medium or any combination of a plurality of readable media. The readable medium may be a readable signal medium or a readable storage medium. The readable storage medium includes, for example but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, advantages, superiorities, and effects mentioned in this disclosure are merely examples but are not for limitation, and it cannot be considered that these advantages, superiorities, and effects are necessary for each embodiment of this disclosure. In addition, specific details described above are merely for examples and for ease of understanding, rather than limitations. The details described above do not limit that this disclosure must be implemented by using the foregoing specific details.

**EP 4 671 068 A1**

A person skilled in the art may make various modifications and variations to this disclosure without departing from the spirit and the scope of this application. In this way, if these modifications and variations of this application fall within the scope of the claims and equivalent technologies of the claims of this disclosure, this disclosure also intends to include these modifications and variations.

**Claims**

1.  A time to collision prediction method for a vehicle, **characterized in that** the time to collision prediction method comprises:

    obtaining (201) first state information of an ego vehicle and second state information of a target object;
    determining (202) a collision risk and a first predicted time to collision between the ego vehicle and the target object based on the first state information and the second state information;
    in response to that the collision risk indicates that a collision will occur between the ego vehicle and the target object, determining (203) a collision state between the ego vehicle and the target object based on the first predicted time to collision; and
    determining (204) a target time to collision between the ego vehicle and the target object based on the collision state and the first predicted time to collision.

2.  The method according to claim 1, wherein the determining (202) a collision risk between the ego vehicle and the target object based on the first state information and the second state information comprises:

    determining (221) a first predicted trajectory within a preset time period for the ego vehicle based on the first state information;
    determining (222) a second predicted trajectory within the preset time period for the target object based on the second state information;
    determining (223) at least one second predicted time to collision between the ego vehicle and the target object based on the first predicted trajectory and the second predicted trajectory; and
    determining (224) the collision risk between the ego vehicle and the target object based on the at least one second predicted time to collision.

3.  The method according to claim 2, wherein the determining (224) the collision risk between the ego vehicle and the target object based on the at least one second predicted time to collision comprises:

    Determining (2241), based on the first state information, a corresponding collision avoidance state of the ego vehicle at the at least one second predicted time to collision, to obtain at least one first collision avoidance state;
    determining, based on the second state information, a corresponding collision avoidance state of the target object at the at least one second predicted time to collision, to obtain at least one second collision avoidance state; and
    determining (2242) the collision risk between the ego vehicle and the target object based on the first collision avoidance state and the second collision avoidance state at the second predicted time to collision.

4.  The method according to claim 3, wherein the determining (2242) the collision risk between the ego vehicle and the target object based on the first collision avoidance state and the second collision avoidance state at the second predicted time to collision comprises:

    determining a collision risk between the ego vehicle and the target object at the second predicted time to collision based on the first collision avoidance state and the second collision avoidance state at the second predicted time to collision;
    in response to that there is no collision risk between the ego vehicle and the target object at each second predicted time to collision, determining that no collision will occur between the ego vehicle and the target object; and
    in response to that there is a collision risk between the ego vehicle and the target object at the at least one second predicted time to collision, determining that the collision will occur between the ego vehicle and the target object.

5.  The method according to claim 1, wherein the in response to that the collision risk indicates that a collision will occur between the ego vehicle and the target object, determining (203) a collision state between the ego vehicle and the target object based on the first predicted time to collision comprises:

19

Determining (231), based on the first state information, a first center coordinate, first size information, and a first orientation angle of the ego vehicle at the first predicted time to collision; and determining, based on the second state information, a second center coordinate, second size information, and a second orientation angle of the target object at the first predicted time to collision;

determining (232) a first bounding box of the ego vehicle based on the first center coordinate, the first size information, and the first orientation angle, and determining a second bounding box of the target object based on the second center coordinate, the second size information, and the second orientation angle;

determining (233) a positional relationship between the first bounding box and the second bounding box; and

determining (234) the collision state between the ego vehicle and the target object based on the positional relationship, the first orientation angle, and the second orientation angle.

6. The method according to any one of claims 1 to 5, wherein the determining (204) a target time to collision between the ego vehicle and the target object based on the collision state and the first predicted time to collision comprises:

obtaining (241) at least one collision mode in the collision state, wherein the at least one collision mode corresponds to one collision corner point and one collision edge;

determining (242) a corresponding collision compensation time and a corresponding collision point for the collision mode based on the collision corner point and the collision edge corresponding to the collision mode, to obtain at least one collision compensation time and at least one collision point;

determining (243) a target compensation time based on the at least one collision compensation time and the at least one collision point; and

determining (244) the target time to collision based on the target compensation time and the first predicted time to collision.

7. The method according to claim 6, wherein the determining (243) a target compensation time based on the at least one collision compensation time and the at least one collision point comprises:

performing validity verification on the at least one collision point to obtain at least one valid collision point; and

determining the target compensation time based on collision compensation time of the at least one valid collision point.

8. The method according to claim 2, wherein the determining (221) a first predicted trajectory within a preset time period for the ego vehicle based on the first state information comprises:

dividing the preset time period into a preset quantity of sub-time periods;

iteratively determining a corresponding trajectory segment for the sub-time periods based on the first state information; and

determining the first predicted trajectory based on the corresponding trajectory segment of each sub-time period.

9. The method according to claim 8, wherein the determining (223) at least one second predicted time to collision between the ego vehicle and the target object based on the first predicted trajectory and the second predicted trajectory comprises:

determining the second predicted time to collision between the ego vehicle and the target object within each sub-time period in a chronological order, until it is determined that the collision risk between the ego vehicle and the target object at one determined second predicted time to collision indicates that a collision will occur.

10. A time to collision prediction apparatus for a vehicle, **characterized in that** the time to collision prediction apparatus comprises:

a first obtaining module (101), configured to obtain first state information of an ego vehicle and second state information of a target object;

a first determining module (102), configured to determine a collision risk and a first predicted time to collision between the ego vehicle and the target object based on the first state information and the second state information;

a second determining module (103), configured to determine, in response to that the collision risk indicates that a collision will occur between the ego vehicle and the target object, a collision state between the ego vehicle and the target object based on the first predicted time to collision; and

a third determining module (104), configured to determine a target time to collision between the ego vehicle and the target object based on the collision state and the first predicted time to collision.

11. The time to collision prediction apparatus according to claim 10, wherein the first determining module (102) comprises:

a first determining submodule (1021), configured to determine a first predicted trajectory within a preset time period for the ego vehicle based on the first state information;
a second determining submodule (1022), configured to determine a second predicted trajectory within the preset time period for the target object based on the second state information;
a third determining submodule (1023), configured to determine at least one second predicted time to collision between the ego vehicle and the target object based on the first predicted trajectory and the second predicted trajectory; and
a fourth determining submodule (1024), configured to determine the collision risk between the ego vehicle and the target object based on the at least one second predicted time to collision.

12. The time to collision prediction apparatus according to claim 10, wherein the second determining module (103) comprises:

a fifth determining submodule (1031), configured to determine, based on the first state information, a first center coordinate, first size information, and a first orientation angle of the ego vehicle at the first predicted time to collision; and determine, based on the second state information, a second center coordinate, second size information, and a second orientation angle of the target object at the first predicted time to collision;
a sixth determining submodule (1032), configured to determine a first bounding box of the ego vehicle based on the first center coordinate, the first size information, and the first orientation angle; and determine a second bounding box of the target object based on the second center coordinate, the second size information, and the second orientation angle;
a seventh determining submodule (1033), configured to determine a positional relationship between the first bounding box and the second bounding box; and
an eighth determining submodule (1034), configured to determine the collision state between the ego vehicle and the target object based on the positional relationship, the first orientation angle, and the second orientation angle.

13. The time to collision prediction apparatus according to any one of claims 10 to 12, wherein the third determining module 104 comprises:

a first obtaining submodule (1041), configured to obtain at least one collision mode in the collision state, wherein the at least one collision mode corresponds to one collision corner point and one collision edge;
a ninth determining submodule (1042), configured to determine a corresponding collision compensation time and a corresponding collision point for the collision mode based on the collision corner point and the collision edge corresponding to the collision mode, to obtain at least one collision compensation time and at least one collision point;
a tenth determining submodule (1043), configured to determine a target compensation time based on the at least one collision compensation time and the at least one collision point; and
an eleventh determining submodule (1044), configured to determine the target time to collision based on the target compensation time and the first predicted time to collision.

14. A computer readable storage medium, wherein the storage medium stores computer program instructions, when executed by a processor, cause the processor to implement the time to collision prediction method for a vehicle according to any one of claims 1 to 9.

15. An electronic device, **characterized in that** the electronic device comprises:

a memory (12), configured to store a computer program product; and
a processor (11), configured to execute the computer program product stored in the memory (12), wherein when the computer program product is executed, the processor (11) implements the time to collision prediction method for a vehicle according to any one of claims 1 to 9.

FIG. 1

Obtaining first state information of an ego vehicle and second state information of a target object — 201

Determining a collision risk and a first predicted time to collision between the ego vehicle and the target object based on the first state information and the second state information — 202

In response to that the collision risk indicates that a collision will occur between the ego vehicle and the target object, determining a collision state between the ego vehicle and the target object based on the first predicted time to collision — 203

Determining a target time to collision between the ego vehicle and the target object based on the collision state and the first predicted time to collision — 204

FIG. 2

Determining a first predicted trajectory within a preset time period for an ego vehicle based on first state information — 221

Determining a second predicted trajectory within the preset time period for a target object based on second state information — 222

Determining at least one second predicted time to collision between the ego vehicle and the target object based on the first predicted trajectory and the second predicted trajectory — 223

Determining a collision risk between the ego vehicle and the target object based on the at least one second predicted time to collision — 224

FIG. 3

Determining, based on first state information, a corresponding collision avoidance state of an ego vehicle at at least one second predicted time to collision, to obtain at least one first collision avoidance state; and determining, based on second state information, a corresponding collision avoidance state of a target object at the at least one second predicted time to collision, to obtain at least one second collision avoidance state    2241

Determining a collision risk between the ego vehicle and the target object based on the first collision avoidance state and the second collision avoidance state at the second predicted time to collision    2242

FIG. 4

Determining, based on first state information, a first center coordinate, first size information, and a first orientation angle of an ego vehicle at a first predicted time to collision; and determine, based on second state information, a second center coordinate, second size information, and a second orientation angle of a target object at the first predicted time to collision    231

Determining a first bounding box of the ego vehicle based on the first center coordinate, the first size information, and the first orientation angle, and determine a second bounding box of the target object based on the second center coordinate, the second size information, and the second orientation angle    232

Determining a positional relationship between the first bounding box and the second bounding box    233

Determining a collision state between the ego vehicle and the target object based on the positional relationship, the first orientation angle, and the second orientation angle    234

FIG. 5

(a)

(b)

FIG. 6

(a)

(b)

FIG. 7

(a)

(b)

FIG. 8

Obtaining at least one collision mode in a collision state, wherein the at least one collision mode corresponds to one collision corner point and one collision edge — 241

Determining a corresponding collision compensation time and a corresponding collision point for the collision mode based on the collision corner point and the collision edge corresponding to the collision mode, to obtain at least one collision compensation time and at least one collision point — 242

Determining a target compensation time based on the at least one collision compensation time and the at least one collision point — 243

Determining a target time to collision based on the target compensation time and a first predicted time to collision — 244

FIG. 9

First obtaining module — 101

First determining module — 102

Second determining module — 103

Third determining module — 104

FIG. 10

First determining module

First determining submodule — 1021

Second determining submodule — 1022

Third determining submodule — 1023

Fourth determining submodule — 1024

102

Second determining module

Fifth determining submodule — 1031

Sixth determining submodule — 1032

Seventh determining submodule — 1033

Eighth determining submodule — 1034

103

First obtaining module — 101

Third determining module

First obtaining submodule — 1041

Ninth determining submodule — 1042

Tenth determining submodule — 1043

Eleventh determining submodule — 1044

104

FIG. 11

Electronic device

Processor 11

Input device 13

Memory 12

Output device 14

FIG. 12

Europäisches
Patentamt

European
Patent Office

Office européen
des brevets

# EUROPEAN SEARCH REPORT

**Application Number**

EP 25 18 5854

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 114 394 091 A (UNIV JILIN) 26 April 2022 (2022-04-26) | 1,5,6, 10,12-15 | INV. B60W30/095 |
| A | * paragraphs [0004] - [0058] * <br> * figure 3 * | 2-4,7-9, 11 | |
| A | US 2024/042999 A1 (IWASE TAKUYA [JP] ET AL) 8 February 2024 (2024-02-08) <br> * paragraphs [0068] - [0070] * | 1-15 | |
| A | US 2022/234581 A1 (KIM DONG IK [KR]) 28 July 2022 (2022-07-28) <br> * paragraphs [0169], [0170] * | 1-15 | |

**TECHNICAL FIELDS SEARCHED (IPC)**

B60W

The present search report has been drawn up for all claims

| Place of search | Date of completion of the search | Examiner |
|---|---|---|
| Munich | 13 November 2025 | Müller-Nagy, Andrea |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 18 5854

This annex lists the patent family members relating to the patent documents cited in the above-mentioned European search report.
The members are as contained in the European Patent Office EDP file on
The European Patent Office is in no way liable for these particulars which are merely given for the purpose of information.

13-11-2025

| Patent document cited in search report | | Publication date | Patent family member(s) | | Publication date |
|---|---|---|---|---|---|
| CN 114394091 | A | 26-04-2022 | NONE | | |
| US 2024042999 | A1 | 08-02-2024 | JP | 2024021869 A | 16-02-2024 |
| | | | US | 2024042999 A1 | 08-02-2024 |
| US 2022234581 | A1 | 28-07-2022 | CN | 114466776 A | 10-05-2022 |
| | | | DE | 112020002753 T5 | 03-03-2022 |
| | | | KR | 20200140979 A | 17-12-2020 |
| | | | US | 2022234581 A1 | 28-07-2022 |
| | | | WO | 2020246735 A1 | 10-12-2020 |

EPO FORM P0459

For more details about this annex : see Official Journal of the European Patent Office, No. 12/82